# EUROPÄISCHE PATENTSCHRIFT

(11) **EP 3 646 126 B1**
(45) Veröffentlichungstag und Bekanntmachung des Hinweises auf die Patenterteilung: **29.12.2021**
(21) Anmeldenummer: 18731820.9
(22) Anmeldetag: 14.06.2018
(51) Int. Cl.: G05D 1/00

(54) **MOBILE EINHEIT, MOBILES ENDGERÄT UND DAZUGEHÖRIGES VERFAHREN**
MOBILE UNIT, MOBILE TERMINAL, AND ASSOCIATED METHOD
UNITÉ MOBILE, TERMINAL MOBILE ET PROCÉDÉ ASSOCIÉ

(30) Priorität: 30.06.2017 DE 102017211165
(43) Veröffentlichungstag der Anmeldung: 06.05.2020
(73) Patentinhaber: BSH Hausgeräte GmbH, 81739 München (DE)
(72) Erfinder: FREMEREY, Maximilian, 97616 Bad Neustadt/Saale (DE); LANZ, Elmar, 80469 München (DE); STENGEL, Marcel, 97633 Sulzfeld (DE)
(86) Internationale Anmeldenummer: PCT/EP2018/065811
(87) Internationale Veröffentlichungsnummer: WO 2019/001978

(56) Entgegenhaltungen:
- WO-A1-2017/078304
- JP-A- 2007 226 322
- US-A1- 2013 056 032

## Beschreibung

Die Erfindung betrifft eine mobile Einheit, insbesondere einen mobilen Reinigungsroboter, ein mobiles Endgerät zum Steuern der mobilen Einheit sowie ein dazugehöriges Verfahren sowie ein dazugehöriges Computerprogramm-Produkt.

### Stand der Technik

Aus dem Stand der Technik sind mobile und autonom agierende Staubsaugroboter bekannt. Einige von ihnen fahren erratisch und strategielos nach einem Zufallsprinzip durch die zu reinigende Umgebung, andere bauen eine Karte ihrer Umgebung auf und folgen bei ihrer Reinigung einem Plan, um die Effizienz des Reinigungsvorgangs zu erhöhen.

Die Einflussmöglichkeiten eines Nutzers auf den Staubsaugroboter sind zumeist recht begrenzt, weil dieser autonom agiert. Dadurch sind auch die Einsatzmöglichkeiten des Staubsaugroboters eingeschränkt.

US 2013/056032 A1 (CHOE SUUK [KR] ET AL) 7. März 2013 (2013-03-07) offenbart einen Reinigungsroboter mit einer Antriebseinheit zum Bewegen des Reinigungsroboters, einer Positionserkennungseinheit zum Erkennen der Position des Reinigungsroboters, einer Kommunikationseinheit mit einem Funkkommunikationsverfahren zum Austausch von Daten mit einem Terminal und einer Bilderfassungseinheit mit einer Kamera, wobei Bildinformationen an das Terminal übertragen werden. Wenn ein Benutzer vorbestimmte Punkte auf einer Karte auf dem Terminal berührt, setzt die Steuerung einen Bewegungspfad oder einen Patrouillenpfad durch Verbinden der Punkte.

Es ist eine Aufgabe der vorliegenden Erfindung, eine mobile Einheit, insbesondere einen mobilen Reinigungsroboter, mit erweiterten Einflussmöglichkeiten durch den Nutzer und damit einem erweiterten Funktionsumfang vorzuschlagen. Darüber hinaus sollen ein mobiles Endgerät und ein Verfahren angegeben werden, mit dessen Hilfe die vorgeschlagene mobile Einheit gesteuert werden kann.

Diese Aufgaben werden durch die Gegenstände der unabhängigen Patentansprüche gelöst. Die Unteransprüche geben Ausführungsformen der Erfindung an.

### Offenbarung der Erfindung

Die Erfindung ist in den unabhängigen Ansprüchen definiert.

Eine erfindungsgemaße mobile Einheit umfasst eine Antriebseinrichtung zum Bewegen der mobilen Einheit in einer Umgebung, eine Navigationseinheit zum Orientieren in der Umgebung und eine Übertragungseinrichtung zum drahtlosen Austausch von Daten z.B. mit einem mobilen Endgerät. Bei der mobilen Einheit kann es sich insbesondere um einen mobilen Reinigungsroboter wie z.B. einen Staubsaugroboter handeln. Erfindungsgemäß ist die mobile Einheit dafür eingerichtet, über die Übertragungseinrichtung einen Punkt in der Umgebung zu empfangen und mittels der Navigationseinheit und der Antriebseinrichtung den Punkt anzufahren. An dem Punkt können dann unterschiedliche Aktionen durchgeführt werden. Beispielsweise kann der Punkt besonders gründlich gereinigt werden. Auf diese Weise besitzt der Nutzer die Möglichkeit, Einfluss auf die mobile Einheit zu nehmen, die ansonsten rein autonom agiert. Insbesondere kann die mobile Einheit auf besonders säuberungsbedürftige Punkte wie z.B. den Bodenbereich unter einem Esstisch oder den Schlafbereich von Haustieren hingewiesen werden.

In einer Ausführungsform ist die Navigationseinheit dafür eingerichtet, eine Karte der Umgebung zu erstellen, in der sich die mobile Einheit bewegt. Die Daten, die solch einer Karte zugrunde liegen, können zudem mittels der Übertragungseinrichtung beispielsweise an ein mobiles Endgerät gesendet werden, wo diese Daten wiederum als Karte angezeigt werden, so dass der Nutzer des mobilen Endgerätes mit dieser Karte interagieren kann. Insbesondere kann der Nutzer dann basierend auf der Karte ortsbezogene Anweisungen geben. Sofern das mobile Endgerät die Karte bereits kennt, weil sie z.B. zu einem früheren Zeitpunkt bereits übertragen wurde, ist eine Übertragung natürlich entbehrlich.

Die mobile Einheit kann eine Kamera aufweisen. Diese kann z.B. einen Videostrom erzeugen, der mittels der Übertragungseinrichtung an das mobile Endgerät gesendet werden kann. Manchmal möchte der Nutzer des mobilen Endgerätes, der den von der mobilen Einheit gesendeten Videostrom auf dem mobilen Endgerät betrachtet, an einen besonderen Punkt fahren. Durch die hier vorgeschlagene Lösung, basierend auf der Karte einen Punkt auszuwählen, muss der Nutzer nicht mehr mittels einer rechts-links und vorwärts-zurück Steuerung die mobile Einheit navigieren. Vielmehr kann er auf der Karte einfach den anzusteuernden Punkt auswählen und der mobilen Einheit mitteilen, die dann diesen Punkt anfährt. Dadurch hat der Nutzer den Vorteil einer vereinfachten Navigation und einer besseren Orientierung im Raum. Darüber hinaus werden Übertragungslatenzen kaschiert, die bei einer rechts-links und vorwärts-zurück Steuerung den Nutzer stören können, weil er seine Steuerungsanweisungen systematisch auf der Basis veralteter Videodaten gibt.

In einigen Ausführungsformen ist auch die Eingabe und Übertragung einer Route möglich, indem eine Abfolge von Punkten an die mobile Einheit gesendet wird. Hierfür kann die mobile Einheit dafür eingerichtet sein, über die Übertragungseinrichtung eine Abfolge von Punkten zu empfangen und mittels der Navigationseinheit und der Antriebseinrichtung die Punkte gemäß der Abfolge nacheinander anzufahren. Dadurch werden ein Patrouillieren bzw. die Übertragung einer ortsbezogene Tätigkeitsliste möglich.

Die mobile Einheit ist eingerichtet, bei Erreichen des Punktes oder eines Punktes der Abfolge zumindest eine Aktion auszuführen. Die zumindest eine Aktion wird zusammen mit dem Punkt oder der Abfolge von Punkten über die Übertragungseinrichtung empfangen, wobei jede Aktion einem oder mehreren Punkten zugeordnet sein kann. Natürlich ist es auch denkbar, dass die Aktion bereits implizit festgelegt ist, wie z.B. Staubsaugen. Dann ist eine Übertragung der Aktion entbehrlich, weil sie der mobilen Einheit ohne Weiteres bekannt ist.

Eine Aktion kann bspw. darin bestehen, eine Ansicht der Kamera um 360° zu schwenken. Dies kann beispielsweise dadurch erfolgen, dass sich die mobile Einheit einmal um sich selbst dreht. Alternativ kann auch die Kamera drehbar gelagert sein, so dass sie unabhängig von der mobilen Einheit gedreht werden kann. Bildlich gesprochen schaut sich die mobile Einheit nach dem Erreichen des Punktes also um. Dadurch kann sich der Nutzer, der den Videostrom der Kamera auf seinem mobilen Endgerät empfängt, davon überzeugen, dass z.B. in seiner Wohnung alles in Ordnung ist, dass z.B. kein Wasserrohrbruch vorliegt, kein Einbrecher die Wohnung verwüstet hat und auch keine weiteren besonderen Vorkommnisse vorliegen. Einige Nutzer mobiler Reinigungsroboter besitzen Haustiere, die noch nicht zuverlässig stubenrein sind. Soll ein Reinigungsvorgang des mobilen Reinigungsroboters aus der Ferne gestartet werden, so kann sich der Nutzer vor dem Reinigungsstart davon überzeugen, dass das Haustier nirgends Fäkalien hinterlassen hat, die durch den Reinigungsvorgang möglicherweise in der Wohnung verteilt werden würden. Aus Sicherheitsgründen kann es vorgesehen sein, dass der Videostrom verschlüsselt übertragen wird bzw. dass für die Aktivierung der Kamera ein Passwort eingegeben werden muss.

In einigen Ausführungsformen besteht eine Aktion darin, Daten mit einer oder mehreren stationären Einheiten auszutauschen. Die stationären Einheiten können beispielsweise Sensoren und/oder Aktoren umfassen. Als Sensoren kommen beispielsweise Staubsensoren, Temperatursensoren, Feuchtigkeitssensoren, Bewegungssensoren, Helligkeitssensoren usw. infrage. Aktoren können z.B. Jalousien, Markisen, Schlösser, Klospülungen, Wasserhähne, Fensterverriegelungen, Herde und Geschirrspüler sein. Für den Datenaustausch können beispielsweise Bluetooth, ZigBee oder Wireless LAN, auch als Wifi bezeichnet, eingesetzt werden. Die Sensoren können mit einer Batterie ausgestattet sein oder aber die für ihren Betrieb notwendige Energie durch Induktion erhalten. Im letzteren Falle ist es denkbar, dass die für den Betrieb des Sensors notwendige Energie durch die mobile Einheit ausgesendet wird, bevor diese den Sensor ausliest. Solche Technologien sind beispielsweise auf der Basis von RFID möglich. Durch das Umherfahren der mobilen Einheit und die Abfrage der stationären Einheiten können die Energieressourcen der Sensoren besonders geschont werden, da beispielsweise auf energiesparende Übertragungsverfahren ausgewichen werden kann, die häufig eine nur geringe Reichweite besitzen. Im Extremfalle kann die mobile Einheit auch selbst die Stromversorgung übernehmen, was unkritisch ist, weil sich die mobile Einheit regelmäßig in ihrer Basisstation aufladen kann. Sofern die Daten mit Aktoren ausgetauscht werden, können die Daten natürlich einen Befehl umfassen, so dass der Aktor erfährt, was der Nutzer veranlasst wissen möchte. Aus Sicherheitsgründen kann es erforderlich sein, dass der Befehl ein Passwort umfassen muss.

Auch die mobile Einheit selbst umfasst einen oder mehrere Sensoren zum Messen von Daten. Der einen oder mehrere Sensoren umfassen einen Rauchsensor, einen Gassensor, einen Temperatursensor, einen Sensor zur Feuchtigkeitsmessung, einen Sensor zur Detektion biologischer Stoffe und/oder einen Sensor zum Erkennen von Gerüchen.

Von Vorteil ist dies insbesondere im Brandfalle, weil nicht alle durch einen Brand verursachten Gase bzw. Partikel nach oben steigen, sondern einige auch am Boden entlang kriechen. Durch einen Rauchsensor an der mobilen Einheit kann die Sicherheit, die durch Rauchmelder an der Decke bereitgestellt wird, noch einmal verbessert werden. Es ist ebenfalls möglich, dass die mobile Einheit einen Sensor zur Feuchtigkeitsmessung umfasst, so dass besonders schimmelanfällige Orte frühzeitig erkannt werden können. Auch die Detektion biologischer Stoffe und das Erkennen von Gerüchen sind denkbar. Die gesammelten oder gemessenen Daten können bspw. an das mobile Endgerät oder an einen Server im Internet gesendet werden, wo sie möglicherweise weiter ausgewertet werden.

Besondere Vorteile ergeben sich, wenn die durch Sensoren ermittelten Daten dynamisch durch die mobile Einheit verarbeitet werden und von ihr genutzt werden, um entsprechende Aktoren wie Fensterverriegelungen zu betätigen. Wenn die mobile Einheit beispielsweise feststellt, dass es an einem Ort besonders feucht ist, kann sie das Fenster öffnen. Wenn sie an einem beschattbaren Ort eine hohe Sonneneinstrahlung misst, kann sie die Markise ausfahren. Sofern sie einen Brand erkennt, ist es vorteilhaft, wenn sie diese Information an das mobile Endgerät bzw. an einen Brandmeldeserver oder die örtliche Feuerwehr meldet.

In einigen Ausführungsformen weist die mobile Einheit eine Verarbeitungseinrichtung auf. Diese kann dafür eingerichtet sein, den Videostrom und/oder die Daten, z.B. die Daten der Sensoren, zu verarbeiten. Verarbeiten kann in diesem Zusammenhang eine Analyse, eine Interpretation, eine Aggregation, eine Verdichtung, einen Vergleich mit einem Grenzwert oder eine Verteilung der Daten bzw. des Videostroms umfassen.

Die Verarbeitungseinrichtung kann beispielsweise dafür eingerichtet sein, den Videostrom mittels einer Objekterkennungssoftware zu analysieren oder den Videostrom zur Objekterkennung mittels der Übertragungseinrichtung an einen Cloud-Dienst oder das mobile Endgerät weiterzuleiten. Mittels der Objekterkennung ist es beispielsweise möglich, Hundefäkalien oder andere Haustier-verursachte Verunreinigungen zu erkennen und in Reaktion darauf No-Go-Zones, also Zonen, in die die mobile Einheit nicht hineinfahren soll, zu definieren.

In einer Ausführungsform ist die Verarbeitungseinrichtung dafür eingerichtet, die Daten mittels einer Gaserkennungssoftware zu analysieren oder die Daten zur Gaserkennung mittels der Übertragungseinrichtung an einen Cloud-Dienst oder an das mobile Endgerät weiterzuleiten. Auf diese Weise ist es z.B. möglich, einen Brand zu erkennen und dementsprechend Alarm zu schlagen. Im Brandfalle kann ein Warnton ausgegeben, eine Benachrichtigung übers Internet versendet oder die Wahl einer Notfallrufnummer ausgelöst werden. Schlafbereiche können im Brandfall gezielt angefahren werden, um dort möglicherweise ruhende Personen zu wecken. Anschließend kann die mobile Einheit optisch und akustisch eine Fluchtroute weisen. Auch die Übertragung von Messwerten an die Feuerwehr ist natürlich denkbar. Mit Hilfe der Gaserkennungssoftware kann auch die Erkennung von Haustier-Fäkalien aufgrund ihres Geruchs ermöglicht werden.

Zusätzlich umfasst die vorliegende Erfindung ein mobiles Endgerät mit einem berührungsempfindlichen Bildschirm, auf dem eine Karte anzeigbar ist, die eine Umgebung repräsentiert, in der sich die oben beschriebene mobile Einheit bewegen kann. Bei dem mobilen Endgerät kann es sich beispielsweise um ein Smartphone oder einen Tablet-PC handeln. Zum drahtlosen Austausch von Daten mit der mobilen Einheit weist das mobile Endgerät eine Übertragungseinrichtung auf. Erfindungsgemäß ist das mobile Endgerät derartig eingerichtet, dass durch ein Berühren des Bildschirms innerhalb der Karte ein Punkt festlegbar ist, an den sich die mobile Einheit bewegen soll, und der Punkt mittels der Übertragungseinrichtung an die mobile Einheit sendbar ist. Dadurch kann ein Nutzer des mobilen Endgerätes der mobilen Einheit besonders bequem ortsbezogene Anweisungen geben.

In einigen Ausführungsformen erhält das mobile Endgerät Daten, die der besagten Karte zugrunde liegen, von der mobilen Einheit, die diese beispielsweise mittels ihrer Sensoren, wie z.B. LIDAR-Sensoren oder Ultraschallsensoren, während ihrer Fahrten ermittelt hat. Alternativ kann dem mobilen Endgerät die Karte bereits bekannt sein oder es erhält sie beispielsweise von einem Server.

In einigen Ausführungsformen ist das mobile Endgerät dafür eingerichtet, von der mobilen Einheit einen Videostrom zu empfangen. Dadurch kann der Nutzer des mobilen Endgerätes verfolgen, was die Kamera der mobilen Einheit sieht. Besondere Vorteile ergeben sich, wenn der berührungsempfindliche Bildschirm für die Darstellung zweier Fenster eingerichtet ist, deren Größe vorzugsweise durch einen Nutzer veränderlich ist, wobei in einem ersten Fenster die Karte und in einem zweiten Fenster der Videostrom angezeigt wird. Der Nutzer kann dann durch Berühren der Karte festlegen, wohin die mobile Einheit fahren soll, und während der Fahrt beobachten, was die Kamera aufnimmt. Auf diese Weise wird eine bequeme Steuerung mit den Vorzügen einer Echtzeit-Beobachtung kombiniert.

Das mobile Endgerät kann derartig eingerichtet sein, dass durch mehrmaliges Berühren des Bildschirms innerhalb der Karte eine Abfolge von Punkten festlegbar ist, an die sich die mobile Einheit gemäß der Abfolge nacheinander bewegen soll. Die Abfolge von Punkten wird dann vorzugsweise mittels der Übertragungseinrichtung an die mobile Einheit gesendet. Auf diese Weise ist es besonders bequem möglich, Routen für die mobile Einheit zu definieren.

Vorzugsweise kann bei jeder Berührung eine Aktion festgelegt werden, die an dem gerade gewählten Punkt ausgeführt werden soll. Dementsprechend ist in einigen Ausführungsformen das mobile Endgerät dafür eingerichtet, eine Zuordnung einer oder mehrerer Aktionen zu dem Punkt oder einem Punkt der Abfolge von Punkten zu ermöglichen.

Zur Festlegung der Aktionen ist es für den Nutzer besonders bequem, wenn auf dem Bildschirm innerhalb der Karte Sensoren und/oder Aktoren dargestellt werden, so dass der Nutzer unmittelbar erkennen kann, welche Aktionen an dem gewählten Punkt möglich bzw. sinnvoll sind. Auch die Darstellung einer Fluchtroute auf dem Bildschirm innerhalb der Karte ist denkbar, was besonders im Brandfalle nützlich ist.

Darüber hinaus umfasst die vorliegende Erfindung ein Verfahren zum Festlegen einer Abfolge von Punkten, an die sich eine mobile Einheit, insbesondere ein mobiler Reinigungsroboter, bewegen soll. Gemäß dem Verfahren wird eine Karte auf einem berührungsempfindlichen Bildschirm eines mobilen Endgerätes angezeigt, wobei die Karte eine Umgebung repräsentiert, in der sich die mobile Einheit bewegen kann. Durch Berühren des Bildschirms innerhalb der Karte wird ein Punkt festgelegt, an den sich die mobile Einheit bewegen soll. Dem Punkt wird zumindest eine Aktion zugeordnet, die von der mobilen Einheit an dem Punkt ausgeführt werden soll. Anschließend kann der Nutzer entscheiden, ob ein weiterer Punkt festgelegt werden soll. Falls dies der Fall ist, werden die entsprechenden Schritte Festlegen eines Punktes, gegebenenfalls Zuordnen zumindest einer Aktion zu dem Punkt sowie Entscheiden, ob ein weiterer Punkt festgelegt werden soll, entsprechend wiederholt. Falls kein weiterer Punkt festgelegt werden soll, werden die Punkte und vorzugsweise die zugeordneten Aktionen an die mobile Einheit übertragen. Auf diese Weise kann der Nutzer der mobilen Einheit besonders einfach und bequem ortsbezogene Anweisungen geben.

Die Erfindung umfasst auch ein Computerprogramm-Produkt, das Befehle umfasst, die, wenn diese auf einem handelsüblichen mobilen Endgerät ausgeführt werden, das mobile Endgerät veranlassen, das erfindungsgemäße Verfahren auszuführen.

Die Erfindung wurde mit Bezug auf eine mobile Einheit, ein mobiles Endgerät, ein System, ein Verfahren, ein Computerprogramm-Produkt sowie ein computerlesbares Medium beschrieben. Die mit Bezug auf eine Anspruchskategorie offenbarten Merkmale sind analog auf die anderen Anspruchskategorien anwendbar, so dass den Ausführungsformen der mobilen Einheit und des mobilen Endgeräts entsprechende Ausführungsformen des erfindungsgemäßen Verfahrens und seiner software-bezogenen Implementierungen gegenüberstehen und umgekehrt.

Weitere Details von Ausführungsformen der Erfindung sowie damit zusammenhängende Vorteile werden im Folgenden mit Bezug auf die Figuren erläutert, dabei zeigen
- Figur 1a und 1b: eine Ausführungsform einer erfindungsgemäßen mobilen Einheit;
- Figur 2: eine Ausführungsform eines erfindungsgemäßen mobilen Endgeräts;
- Figur 3a, 3b und 3c: jeweils ein Beispiel für einen Bildschirminhalt, der auf dem Bildschirm des mobilen Endgeräts dargestellt werden kann;
- Figur 4a, 4b, 4c: ein Prinzip einer Auswahl eines Punktes;
- Figur 5: ein Beispiel einer Route;
- Figur 6: ein erstes Beispiel für Aktionen, die auf der Route ausgeführt werden können;
- Figur 7: ein zweites Beispiel für Aktionen, die auf der Route ausgeführt werden können;
- Figur 8: eine Ausführungsform eines erfindungsgemäßen Verfahrens;
- Figur 9: ein Beispiel für eine Benutzerschnittstelle zur Ausführung des Verfahrens; sowie
- Figur 10: ein Beispiel für ein Verfahren, das auf der mobilen Einheit ausgeführt wird.

In der folgenden Beschreibung werden gleiche und gleichwirkende Elemente, sofern nichts anderes angegeben ist, mit demselben Bezugszeichen benannt.

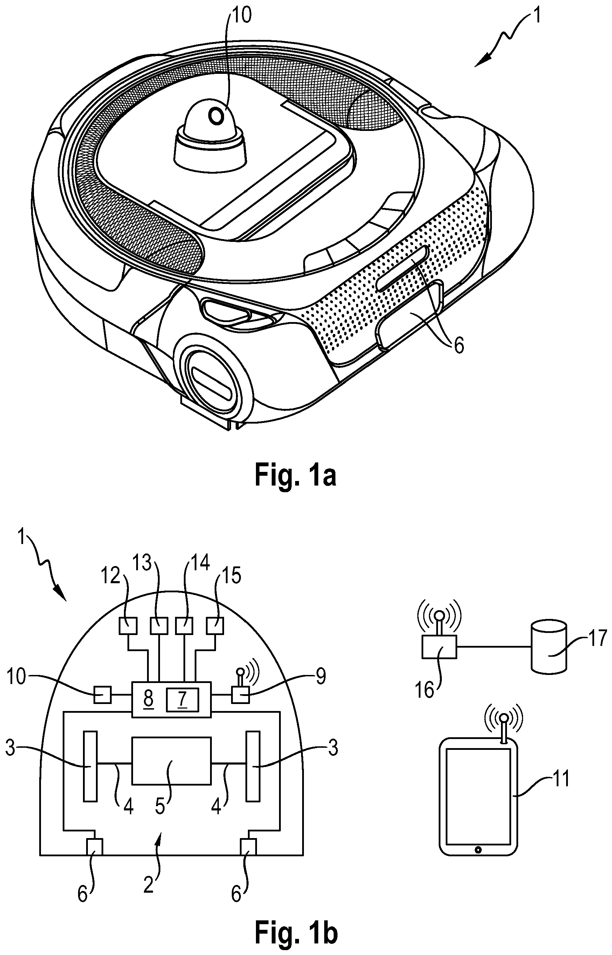

In Figur 1 ist eine Ausführungsform einer erfindungsgemäßen mobilen Einheit 1 in Form eines Staubsaugroboters dargestellt. Während die Figur 1a die mobile Einheit 1 in einer seitlichen Schrägansicht von außen illustriert, ist in Figur 1b eine schematische Durchsicht von oben dargestellt, um die für die Beschreibung der Erfindung interessierenden Merkmale sichtbar zu machen. Die mobile Einheit 1 besitzt eine Antriebseinrichtung 2 zum Bewegen der mobilen Einheit in einer Umgebung. Diese besteht vor allem aus zwei aktiv angetriebenen Rädern 3, mindestens einer Achse 4 sowie mindestens einem Aktor 5, vorzugsweise ein Elektromotor. Zur Orientierung in der Umgebung besitzt die mobile Einheit 1 mehrere Sensoren 6, die beispielsweise als LIDAR-Sensoren ausgestaltet sein können. Diese sind verbunden mit einer Navigationseinheit 7, die die Steuerung der Antriebseinrichtung 2 übernimmt. Die Navigationseinheit 7 ist im vorliegenden Beispiel Bestandteil einer Verarbeitungseinrichtung 8, die mit einer Übertragungseinrichtung 9 zum drahtlosen Austausch von Daten gekoppelt ist. Natürlich weist die mobile Einheit 1 auch einen Saugmund, einen Staubfangbehälter und ein Gebläse auf. Da diese jedoch zur Beschreibung der Erfindung nicht zwingend notwendig sind, soll auf sie hier nicht weiter eingegangen werden.

Die gezeigte Ausführungsform der mobilen Einheit 1 besitzt weiterhin eine Kamera 10, deren Sichtfeld um 360° gedreht werden kann. Dies kann beispielsweise erreicht werden, indem sich die ganze mobile Einheit 1 um sich selbst dreht oder indem die Kamera drehbar gelagert ist und um 360° gedreht werden kann. Die Kamera 10 kann einen Videostrom erzeugen, der über die Übertragungseinrichtung 9 beispielsweise an ein mobiles Endgerät 11 oder an einen WLAN-Router 16 gesendet werden kann. Der WLAN-Router 16 kann den Videostrom an einen Server 17 im Internet weiterleiten, auf dem eine Objekterkennungssoftware ausgeführt wird, die beispielsweise ermittelt, ob im Videostrom Haustier-Fäkalien zu sehen sind. Zusätzlich umfasst die mobile Einheit 1 einen Rauchsensor 12, einen Temperatursensor 13, einen Luftfeuchtigkeitssensor 14 und einen Helligkeitssensor 15. Die Verarbeitungseinrichtung 8 kann bspw. auch die Daten des Rauchsensors 12 über die Übertragungseinrichtung 9 und den WLAN Router 16 an den Server 17 übermitteln, um die Daten bspw. mithilfe einer Gaserkennungssoftware analysieren zu lassen. Die Interpretation von Daten kann insbesondere bei sicherheitsrelevanten Anwendungen wie Gasdetektion natürlich auch direkt auf der mobilen Einheit erfolgen, um die Latenzen zu umgehen, die beim Schicken und Analysieren der Messwerte in der Cloud und Übermittlung der Ergebnisse zurück an die mobile Einheit auftreten.

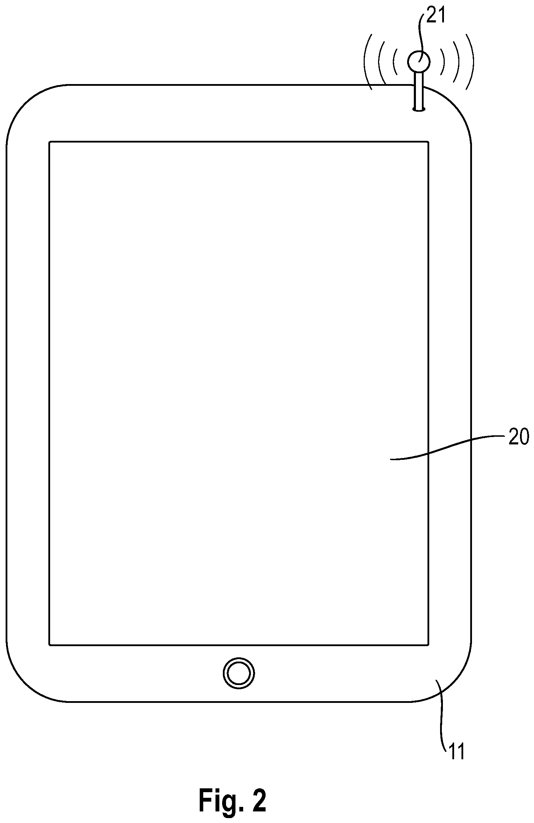

In der Figur 2 ist eine Ausführungsform eines erfindungsgemäßen mobilen Endgerätes 11 in Form eines Tablet-PCs dargestellt. Das mobile Endgerät 11 weist einen berührungsempfindlichen Bildschirm 20 auf, auf dem eine Karte anzeigbar ist, die eine Umgebung repräsentiert, in der sich die mobile Einheit 1 bewegen kann. Darüber hinaus besitzt das mobile Endgerät 11 eine Übertragungseinrichtung 21 zum drahtlosen Austausch von Daten mit der mobilen Einheit 1. Durch Berühren des Bildschirms 20 innerhalb einer angezeigten Karte kann der Nutzer des mobilen Endgerätes 11 einen Punkt festlegen, an den sich die mobile Einheit 1 bewegen soll.

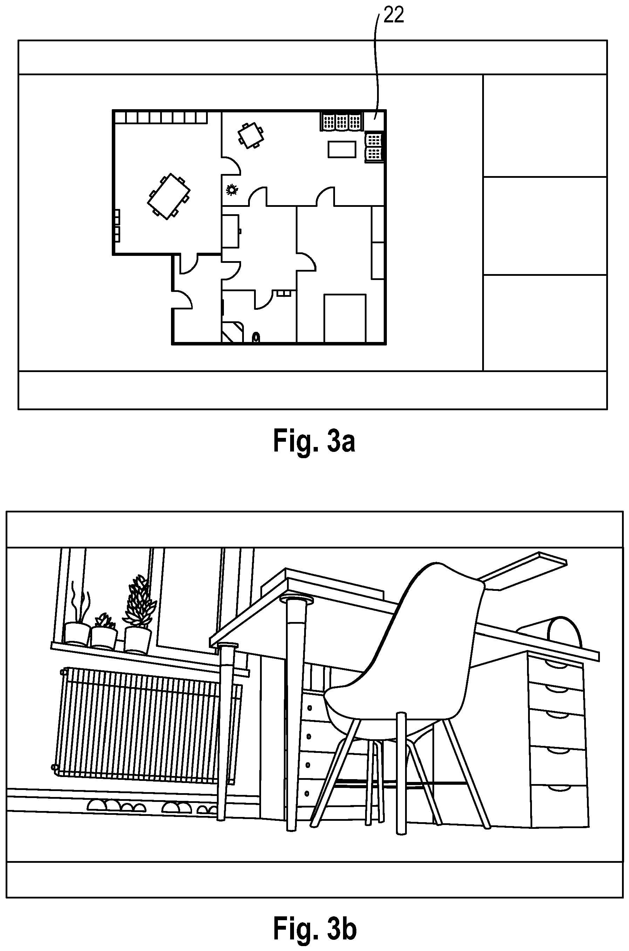

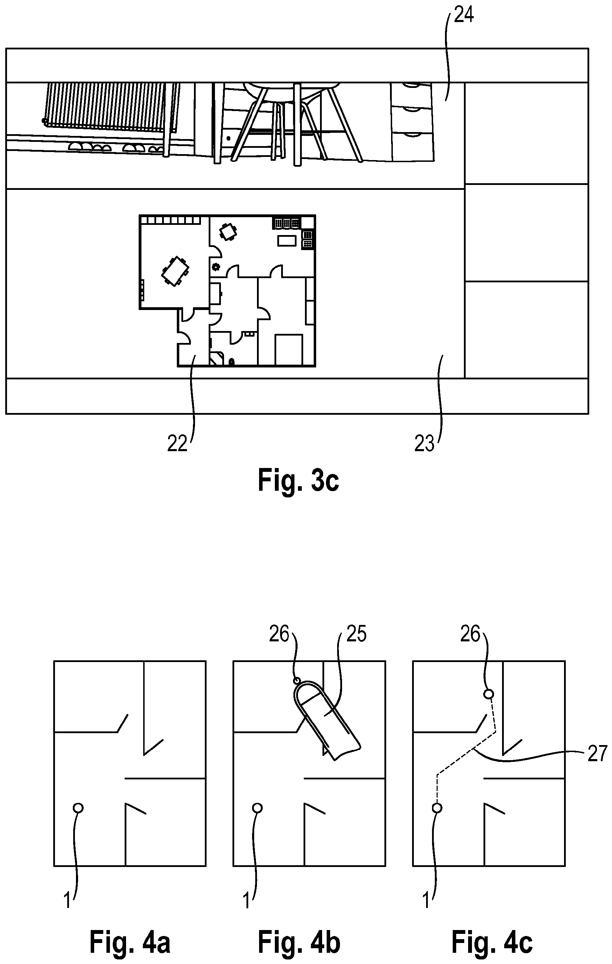

Die Figuren 3a-3c zeigen mehrere Möglichkeiten, was auf dem Bildschirm 20 beispielsweise angezeigt werden kann. In Figur 3a ist eine Karte 22 einer Wohnung zu sehen, in der die mobile Einheit 1 zum Staubsaugen eingesetzt wird. In Figur 3b hat sich der Nutzer des mobilen Endgerätes 11 dafür entschieden, sich den Videostrom anzeigen zu lassen, den die mobile Einheit 1 mithilfe ihrer Kamera 10 aufnimmt. Wie die Figur 3c verdeutlicht, kann der berührungsempfindliche Bildschirm 20 auch für die Darstellung zweier Fenster eingerichtet sein, deren Größe durch den Nutzer veränderlich ist. Während in einem ersten Fenster 23 die Karte 22 dargestellt wird, zeigt ein zweites Fenster 24 den Videostrom an.

Die Figuren 4a-4c verdeutlichen beispielhaft das Prinzip, mit dem innerhalb der Karte 22 ein Punkt festgelegt werden kann, an den sich die mobile Einheit 1 bewegen soll. Am Anfang des Prozesses ist nur die mobile Einheit 1 als Punkt in der Karte eingezeichnet (siehe Figur 4a). Wie die Figur 4b illustriert, kann dann der Nutzer mit seinem Finger 25 durch Berühren des Bildschirms innerhalb der Karte einen weiteren Punkt 26 festlegen, an den sich die mobile Einheit 1 bewegen soll. Die mobile Einheit 1 berechnet dann einen Weg 27, auf dem sie von ihrem derzeitigen Aufenthaltsort zu dem gewählten Punkt 26 gelangt (siehe Figur 4c).

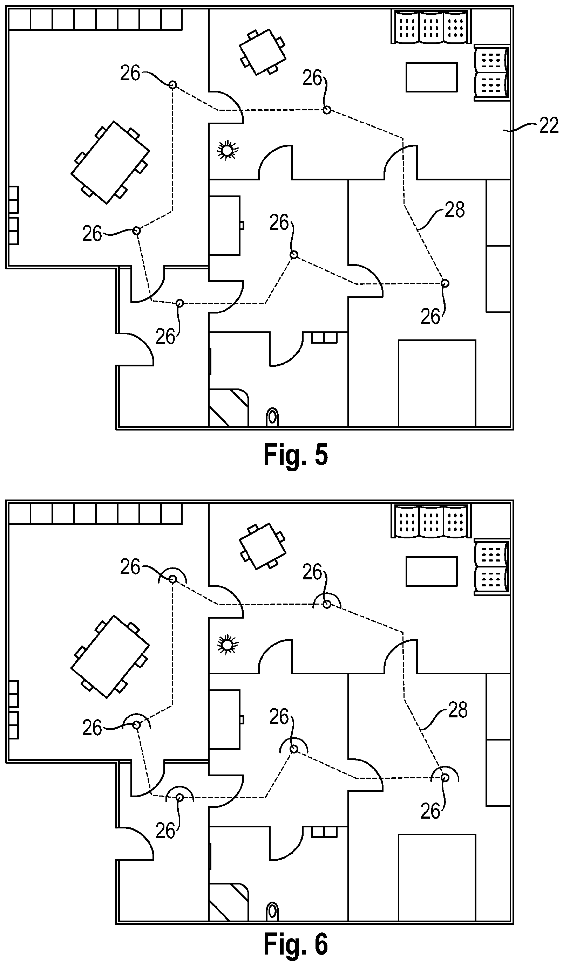

Wie die Figur 5 illustriert, können innerhalb der Karte 22 mittels des soeben dargestellten Prinzips auch mehrere Punkte 26 festgelegt werden, die dann anschließend von der mobilen Einheit 1 nacheinander (denkbarerweise auch als kontinuierlicher Rundgang) abgefahren werden. Wenn die mobile Einheit 1 auf ihrem Weg einfach nur staubsaugen soll, so müssen der mobilen Einheit 1 keine weiteren Informationen mitgeteilt werden. Es ist jedoch auch möglich, für jeden Punkt auf der Route 28 eine Aktion festzulegen. Wie die Figur 6 verdeutlichen soll, ist es beispielsweise denkbar, dass die mobile Einheit 1 unter Nutzung der Kamera 10 an jedem Punkt 26 der Route 28 einen 360° Schwenk vollzieht, um so eine kontinuierliche Überwachung der Wohnung zu ermöglichen. Dabei kann die Staubsaugfunktion der mobilen Einheit 1 entweder aktiviert oder auch abgeschaltet sein.

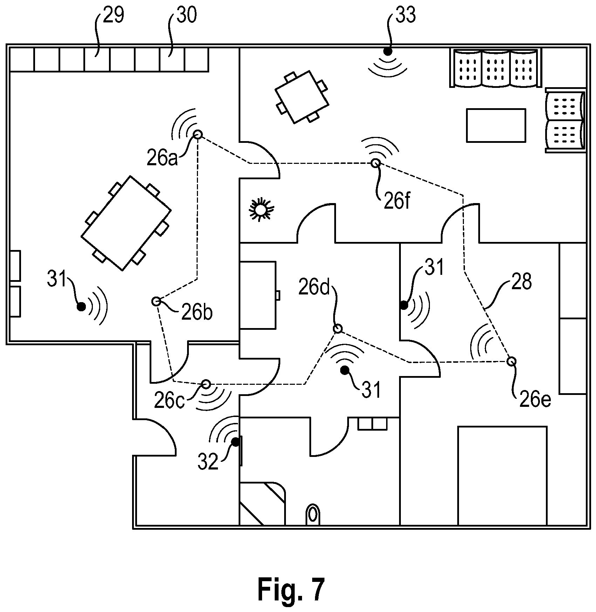

Wie in der Figur 7 dargestellt ist, kann an jedem Punkt der Route 28 auch eine unterschiedliche Aktion ausgeführt werden. An einem ersten Punkt 26a nimmt die mobile Einheit 1 beispielsweise Kontakt mit dem Herd 29 und dem Geschirrspüler 30 auf. Da die mobile Einheit 1 mithilfe ihrer Kamera 10 feststellen konnte, dass sich niemand in der Küche befindet, überprüft sie den Status des Herdes 29. Ist dieser trotz Abwesenheit von Menschen im Haushalt angeschaltet, schlägt die mobile Einheit 1 Alarm, indem sie eine Nachricht an das mobile Endgerät sendet. Auch beim Geschirrspüler 30 fragt sie den Status ab. Einige Geschirrspüler öffnen während oder nach dem Trocknungsvorgang die Tür ein wenig, um Dampf abzulassen. Sofern dies der Fall ist, gibt die mobile Einheit 1 den Befehl an das Küchenfenster, sich einen Spalt weit zu öffnen.

Am zweiten Punkt 26b der Route 28 nimmt die mobile Einheit 1 beispielsweise Kontakt mit einem fest installierten Rauchmelder 31 auf. Wenn der Herd 29 angeschaltet ist, obwohl keine Person im Haushalt anwesend ist, und der Rauchmelder 31 Rauchbildung detektiert, so informiert die mobile Einheit 1 automatisch die Feuerwehr. Am dritten Punkt 26c fragt die mobile Einheit 1 eine fest installierte Videokamera 32 ab, die den Eingangsbereich der Wohnung kontrolliert. Wenn der Nutzer eingestellt hatte, dass niemand zu Hause ist, aber die Videokamera 32 trotzdem Personen detektiert hat, so kann eine entsprechende Nachricht an das mobile Endgerät gesendet werden.

Am vierten Punkt 26d fragt die mobile Einheit 1 wiederum einen fest installierten Rauchmelder 31 ab. Danach fährt sie ins Schlafzimmer und misst am fünften Punkt 26e die Temperatur und die Luftfeuchtigkeit. Wenn es zu warm oder zu feucht ist, kann die mobile Einheit 1 einen Befehl an das entsprechende Fenster geben, sich einen Spalt weit zu öffnen. Anschließend kommuniziert sie noch mit dem fest installierten Rauchmelder 31 im Raum und fährt weiter ins Wohnzimmer. Am sechsten Punkte 26f tritt sie mit einem Helligkeits- oder Lichtsensor 33 in Kontakt. Sofern die Sonneneinstrahlung zu hoch ist, gibt die mobile Einheit 1 einen Befehl an die Markise auszufahren. Anschließend pausiert die mobile Einheit 1, um nach einer Weile die Route erneut abzufahren.

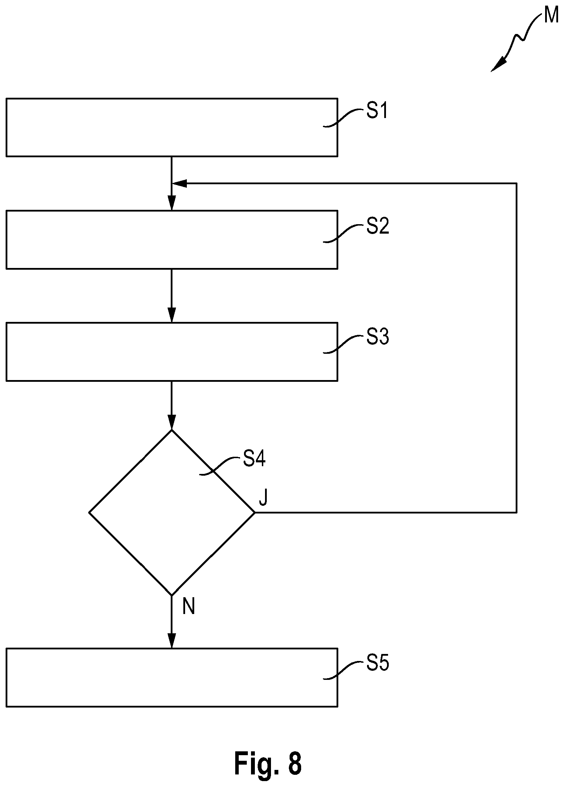

In der Figur 8 ist eine Ausführungsform eines erfindungsgemäßen Verfahrens M dargestellt. In einem Schritt S1 wird zunächst eine Karte auf einem berührungsempfindlichen Bildschirm eines mobilen Endgerätes angezeigt, wobei die Karte eine Umgebung repräsentiert, in der sich die mobile Einheit bewegen kann. In Schritt S2 legt dann der Nutzer einen Punkt fest, an den sich die mobile Einheit bewegen soll. Dies vollbringt er, indem er den Bildschirm an einer entsprechenden Stelle innerhalb der Karte berührt. In einem Schritt S3 kann er dann noch dem gewählten Punkt zumindest eine Aktion zuordnen, die von der mobilen Einheit an dem entsprechenden Punkt ausgeführt werden soll.

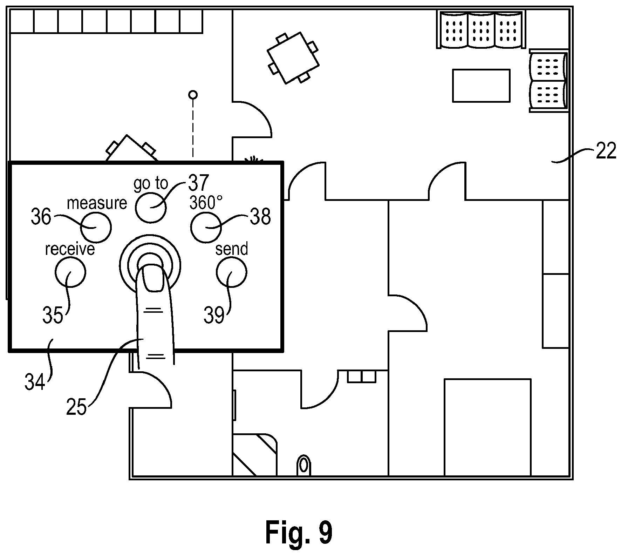

In der Figur 9 ist hierfür eine denkbare Benutzerschnittstelle angezeigt. Nachdem der Nutzer die Karte an der entsprechenden Stelle berührt hat, öffnet sich das gezeigte Fenster 34, das fünf als Kreise dargestellte Auswahloptionen anbietet. Diese kann der Nutzer auswählen, indem er mit seinem Finger von dem gewählten Punkt zu dem entsprechenden Kreis wischt. Wenn der Nutzer beispielsweise seinen Finger 25 zu der ersten Option 35 bewegt, so soll die mobile Einheit an dem gewählten Punkt Daten empfangen. Sofern der Finger 25 zur zweiten Option 36 wandert, wird die mobile Einheit an dem entsprechenden Punkt Daten messen. Als dritte Option 37 wird angeboten, dass die mobile Einheit lediglich zu dem besagten Punkt hinfahren möge. Als vierte Option 38 kann der mobilen Einheit mitgeteilt werden, dass sie die Kameraansicht um 360° schwenken soll. Durch die fünfte Option 39 kann die mobile Einheit angewiesen werden, dass sie an dem entsprechenden Punkt Daten senden soll. Wenn der Nutzer einfach seinen Finger 25 hebt, ohne zu einer der angebotenen Optionen zu wandern, so wird keine Aktion ausgewählt.

In dem in Figur 8 gezeigten Schritt S4 kann der Nutzer dann entscheiden, ob er einen weiteren Punkt festlegen möchte. Sollte dies der Fall sein, wird zu Schritt S2 zurückgesprungen. Wenn der Nutzer alle Punkte eingegeben hat, werden in einem Schritt S5 der Punkt bzw. die Punkte zusammen mit den möglicherweise zugeordneten Aktionen an die mobile Einheit gesendet.

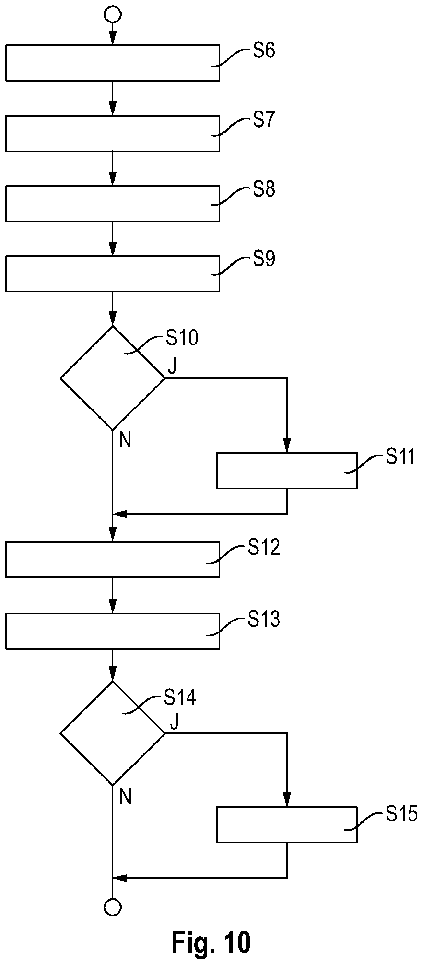

Die Figur 10 stellt ein Beispiel eines denkbaren Verfahrens dar, dass die mobile Einheit ausführt, nachdem sie in Schritt S6 eine Liste der anzufahrenden Punkte und der mit den Punkten verknüpften Aktionen empfangen hat. In Schritt S7 fährt sie zunächst den ersten Punkt an, um dort in einem Schritt S8 die Kameraansicht um 360° zu schwenken. In einem Schritt S9 führt die mobile Einheit die aufgenommenen Videodaten dann einer Objekterkennungssoftware zu. In einem Schritt S10 wird entschieden, ob Hundekot zu sehen ist. Sollte dies der Fall sein, wird in einem Schritt S11 ermittelt, wo der Hundekot liegt, und die entsprechende Stelle wird als eine No-Go-Zone definiert, die von der mobilen Einheit nicht zu reinigen ist. Anschließend wird in Schritt S12 der zweite Punkt angefahren. Dort wird in einem Schritt S13 ein Fenstersensor abgefragt. Sofern das Fenster offen sein sollte, was in Schritt S14 überprüft wird, wird ein entsprechender Aktor in Schritt S15 angewiesen, das Fenster zu schließen.

Die mit Bezug auf die Figuren gemachten Erläuterungen sind rein illustrativ und nicht beschränkend zu verstehen. An den beschriebenen Ausführungsformen können viele Änderungen vorgenommen werden, ohne den Schutzbereich der Erfindung, wie er in den beigefügten Ansprüchen festgelegt ist, zu verlassen.

### Bezugszeichen

- 1: Ausführungsform der mobilen Einheit
- 2: Antriebseinrichtung
- 3: Räder
- 4: Achse
- 5: Aktor, vorzugsweise ein Elektromotor
- 6: Sensor
- 7: Navigationseinheit
- 8: Verarbeitungseinheit
- 9: Übertragungseinrichtung
- 10: Kamera
- 11: Ausführungsform des mobilen Endgeräts
- 12: Rauchsensor
- 13: Temperatursensor
- 14: Luftfeuchtigkeitssensor
- 15: Helligkeitssensor
- 16: WLAN-Router
- 17: Server
- 20: Berührungsempfindlicher Bildschirm
- 21: Übertragungseinrichtung
- 22: Karte
- 23: Erstes Fenster
- 24: Zweites Fenster
- 25: Finger
- 26: Punkt
- 27: Weg
- 28: Route
- 29: Herd
- 30: Geschirrspüler
- 31: Rauchsensor
- 32: Videokamera
- 33: Lichtsensor
- 34: Fenster
- 35: Erste Option
- 36: Zweite Option
- 37: Dritte Option
- 38: Vierte Option
- 39: Fünfte Option
- M: Ausführungsform des Verfahrens
- S1: Anzeigen einer Karte
- S2: Festlegen eines Punktes
- S3: Zuordnen zumindest einer Aktion zu dem Punkt
- S4: Entscheiden, ob ein weiterer Punkt festgelegt werden soll
- S5: Übertragen der Punkte und der zugeordneten Aktionen
- S6: Empfangen der Punkte und der zugeordneten Aktionen
- S7: Anfahren des ersten Punktes
- S8: Schwenken der Kameraansicht um 360 Grad
- S9: Objekterkennung
- S10: Hundekot zu sehen?
- S11: No-Go-Zone definieren
- S12: Anfahren des zweiten Punktes
- S13: Abfragen des Fenstersensors
- S14: Fenster offen?
- S15: Fenster schließen

## Patentansprüche

1. Mobile Einheit (1), insbesondere mobiler Reinigungsroboter, mit
- einer Antriebseinrichtung (2) zum Bewegen der mobilen Einheit in einer Umgebung,
- einer Navigationseinheit (7) zum Orientieren in der Umgebung und
- einer Übertragungseinrichtung (9) zum drahtlosen Austausch von Daten,
- wobei die mobile Einheit (1) dafür eingerichtet ist, über die Übertragungseinrichtung (9) einen Punkt (26) in der Umgebung zu empfangen und mittels der Navigationseinheit (7) und der Antriebseinrichtung (2) den Punkt anzufahren,
**dadurch gekennzeichnet, dass**
- die mobile Einheit einen Sensor zum Messen von Daten (12-15) aufweist, der einen Rauchsensor, einen Gassensor, einen Temperatursensor, einen Sensor zur Feuchtigkeitsmessung, einen Sensor zur Detektion biologischer Stoffe und/oder einen Sensor zum Erkennen von Gerüchen umfasst, und
- die mobile Einheit dafür eingerichtet ist, bei Erreichen des Punktes (26) eine Aktion mit Hilfe des Sensors auszuführen, die zusammen mit dem Punkt über die Übertragungseinrichtung (9) empfangen wird und dem Punkt (26) zugeordnet ist,
- wobei die Aktion umfasst, an dem Punkt Daten mit Hilfe des Sensors zu messen.

2. Mobile Einheit (1) nach Anspruch 1, wobei die Navigationseinheit (7) dafür eingerichtet ist, eine Karte (22) der Umgebung zu erstellen, in der sich die mobile Einheit bewegt, und vorzugsweise Daten, die der Karte (22) zugrunde liegen, mittels der Übertragungseinrichtung (9) an ein mobiles Endgerät (11) zu senden.

3. Mobile Einheit (1) nach Anspruch 1 oder 2, wobei die mobile Einheit weiterhin eine Kamera (10) zur Erzeugung eines Video-Stroms aufweist und vorzugsweise dafür eingerichtet ist, den Video-Strom mittels der Übertragungseinrichtung (9) an ein mobiles Endgerät (11) zu senden.

4. Mobile Einheit (1) nach einem der vorhergehenden Ansprüche, wobei die mobile Einheit dafür eingerichtet ist, über die Übertragungseinrichtung (9) eine Abfolge von Punkten zu empfangen und mittels der Navigationseinheit (7) und der Antriebseinrichtung (2) die Punkte gemäß der Abfolge nacheinander anzufahren.

5. Mobile Einheit (1) nach dem vorhergehenden Anspruch, wobei die mobile Einheit dafür eingerichtet ist, bei Erreichen eines Punktes (26) der Abfolge zumindest eine Aktion auszuführen, wobei die zumindest eine Aktion vorzugsweise zusammen mit der Abfolge von Punkten über die Übertragungseinrichtung (9) empfangen wird und jede Aktion einem oder mehreren Punkten (26) zugeordnet ist.

6. Mobile Einheit (1) nach dem vorhergehenden Anspruch, wobei eine Aktion darin besteht, eine Kameraansicht um 360 Grad zu schwenken.

7. Mobile Einheit (1) nach einem der Ansprüche 5 bis 6, wobei eine Aktion darin besteht, Daten mit einer stationären Einheit (29-33), vorzugsweise einem Sensor (31-33) oder einem Aktor, auszutauschen, wobei der Datenaustausch insbesondere mittels Bluetooth, ZigBee oder Wireless LAN erfolgt.

8. Mobile Einheit (1) nach einem der vorhergehenden Ansprüche, mit einer Verarbeitungseinrichtung (8), die dafür eingerichtet ist, den Video-Strom und/oder die Daten zu verarbeiten, insbesondere zu analysieren, zu interpretieren, zu aggregieren, zu verdichten und/oder mit einem Grenzwert zu vergleichen, und/oder zu verteilen.

9. Mobile Einheit (1) nach dem vorhergehenden Anspruch, wobei die Verarbeitungseinrichtung (8) dafür eingerichtet ist, den Video-Strom mittels einer Objekterkennungssoftware zu analysieren oder den Video-Strom zur Objekterkennung mittels der Übertragungseinrichtung an einen Cloud-Dienst oder das mobile Endgerät weiterzuleiten, und/oder wobei die Verarbeitungseinrichtung (8) dafür eingerichtet ist, die Daten mittels einer Gaserkennungssoftware zu analysieren oder die Daten zur Gaserkennung mittels der Übertragungseinrichtung an einen Cloud-Dienst oder das mobile Endgerät weiterzuleiten.

10. Mobiles Endgerät (11), insbesondere Smartphone oder Tablet PC, mit
- einem berührungsempfindlichen Bildschirm (20), auf dem eine Karte (22) anzeigbar ist, die eine Umgebung repräsentiert, in der sich eine mobile Einheit (1) bewegen kann, und
- einer Übertragungseinrichtung (21) zum drahtlosen Austausch von Daten mit der mobilen Einheit (1),
- wobei das mobile Endgerät derartig eingerichtet ist, dass durch ein Berühren des Bildschirms (20) innerhalb der Karte (22) ein Punkt (26) festlegbar ist, an den sich die mobile Einheit bewegen soll, und der Punkt (26) mittels der Übertragungseinrichtung (21) an die mobile Einheit sendbar ist,
**dadurch gekennzeichnet, dass**
- das mobile Endgerät dafür eingerichtet ist, eine Zuordnung einer Aktion zu dem Punkt zu ermöglichen, wobei die Aktion umfasst, mit Hilfe eines Sensors zum Messen von Daten (12-15) der mobilen Einheit an dem Punkt Daten zu messen, wobei der Sensor einen Rauchsensor, einen Gassensor, einen Temperatursensor, einen Sensor zur Feuchtigkeitsmessung, einen Sensor zur Detektion biologischer Stoffe und/oder einen Sensor zum Erkennen von Gerüchen umfasst und die Aktion einen dieser Sensoren betrifft.

11. Mobiles Endgerät (11) nach Anspruch 10, wobei das mobile Endgerät dafür eingerichtet ist, Daten, die der Karte (22) zugrunde liegen, und/oder einen Video-Strom von der mobilen Einheit (1) zu empfangen.

12. Mobiles Endgerät (11) nach dem vorhergehenden Anspruch, wobei der berührungsempfindliche Bildschirm (20) für die Darstellung zweier Fenster (23, 24) eingerichtet ist, deren Größe vorzugsweise durch einen Nutzer veränderlich ist, wobei in einem ersten Fenster (23) die Karte (22) und in einem zweiten Fenster (24) der Video-Strom anzeigbar ist.

13. Mobiles Endgerät (11) nach einem der Ansprüche 10 bis 12, wobei das mobile Endgerät dafür eingerichtet ist, auf dem Bildschirm (20) innerhalb der Karte (22) Sensoren und/oder Aktoren (29-33) darzustellen.

14. Mobiles Endgerät (11) nach einem der Ansprüche 10 bis 13, wobei das mobile Endgerät dafür eingerichtet ist, eine Zuordnung einer oder mehrerer Aktionen zu einem Punkt der Abfolge von Punkten zu ermöglichen.

15. Verfahren (M) zum Festlegen einer Abfolge von Punkten (26), an die sich eine mobile Einheit (1), insbesondere ein mobiler Reinigungsroboter, bewegen soll, mit den Schritten
a) Anzeigen einer Karte (S1) auf einem berührungsempfindlichen Bildschirm (20) eines mobilen Endgerätes (11), wobei die Karte (22) eine Umgebung repräsentiert, in der sich die mobile Einheit bewegen kann,
b) Festlegen eines Punktes (S2), an den sich die mobile Einheit bewegen soll, durch Berühren des Bildschirms innerhalb der Karte,
c) Zuordnen zumindest einer Aktion zu dem Punkt (S3), wobei die zumindest eine Aktion von der mobilen Einheit an dem Punkt (26) ausgeführt werden soll und umfasst, mit Hilfe eines Sensors zum Messen von Daten (12-15) der mobilen Einheit an dem Punkt Daten zu messen, wobei der Sensor einen Rauchsensor, einen Gassensor, einen Temperatursensor, einen Sensor zur Feuchtigkeitsmessung, einen Sensor zur Detektion biologischer Stoffe und/oder einen Sensor zum Erkennen von Gerüchen umfasst und die Aktion einen dieser Sensoren betrifft,
d) Entscheiden, ob ein weiterer Punkt festgelegt werden soll (S4),
e) Falls ein weiterer Punkt festgelegt werden soll, wiederholen der Schritte b) bis d),
f) Falls kein weiterer Punkt festgelegt werden soll, übertragen der Punkte und der zugeordneten Aktionen an die mobile Einheit (S5).

16. Computerprogramm-Produkt, das Befehle umfasst, die, wenn diese auf einem mobilen Endgerät (11) ausgeführt werden, das mobile Endgerät veranlassen, das Verfahren nach Anspruch 15 auszuführen.

## Claims

1. Mobile unit (1), in particular mobile cleaning robot, with
- a drive facility (2) for moving the mobile unit in an environment,
- a navigation unit (7) for orientation in the environment and
- a transfer facility (9) for wirelessly exchanging data,
- wherein the mobile unit (1) is configured to receive a point (26) in the environment via the transfer facility (9) and to approach the point by means of the navigation unit (7) and the drive facility (2),
**characterised in that**
- the mobile unit has a sensor for measuring data (12-15), which comprises a smoke sensor, a gas sensor, a temperature sensor, a sensor for measuring humidity, a sensor for detecting biological substances and/or a sensor for identifying odours, and
- the mobile unit is configured, upon reaching the point (26), to carry out an action, with the aid of the sensor, which is received together with the point via the transfer facility (9) and is assigned to the point (26),
- wherein the action comprises measuring data at the point with the aid of the sensor.

2. Mobile unit (1) according to claim 1, wherein the navigation unit (7) is configured to create a map (22) of the environment, in which the mobile unit moves, and preferably to send data, on which the map (22) is based, to a mobile terminal (11) by means of the transfer facility (9).

3. Mobile unit (1) according to claim 1 or 2, wherein the mobile unit furthermore has a camera (10) for generating a video stream and preferably is configured to send the video stream to a mobile terminal (11) by means of the transfer facility (9).

4. Mobile unit (1) according to one of the preceding claims, wherein the mobile unit is configured to receive a sequence of points via the transfer facility (9) and to approach the points one after the other according to the sequence by means of the navigation unit (7) and the drive facility (2).

5. Mobile unit (1) according to the preceding claim, wherein the mobile unit is configured, upon reaching a point (26) of the sequence, to carry out at least one action, wherein the at least one action is preferably received together with the sequence of points via the transfer facility (9) and each action is assigned to one or more points (26).

6. Mobile unit (1) according to the preceding claim, wherein an action consists in pivoting a camera view about 360 degrees.

7. Mobile unit (1) according to one of claims 5 to 6, wherein an action consists in exchanging data with a stationary unit (29-33), preferably a sensor (31-33) or an actuator, wherein the data exchange in particular takes places by means of Bluetooth, ZigBee or wireless LAN.

8. Mobile unit (1) according to one of the preceding claims, with a processing facility (8) that is configured to process the video stream and/or the data, in particular to analyse it, to interpret it, to aggregate it, to compress it and/or to compare it with a limit value, and/or to distribute it.

9. Mobile unit (1) according to the preceding claim, wherein the processing facility (8) is configured to analyse the video stream by means of a piece of object identification software or to forward the video stream for object identification to a cloud service or the mobile terminal by means of the transfer facility, and/or wherein the processing facility (8) is configured to analyse the data by means of a piece of gas identification software or to forward the data for gas identification to a cloud service or the mobile terminal by means of the transfer facility.

10. Mobile terminal (11), in particular smartphone or tablet PC, with
- a touch-sensitive screen (20), on which it is possible to display a map (22) that represents an environment in which a mobile unit (1) is able to move, and
- a transfer facility (21) for wirelessly exchanging data with the mobile unit (1),
- wherein the mobile terminal is configured in such a way that, by touching the screen (20), it is possible to specify a point (26) within the map (22) to which the mobile unit should move, and the point (26) can be sent to the mobile unit by means of the transfer facility (21),
**characterised in that**
- the mobile terminal is configured to enable an assignment of an action to the point, wherein the action comprises measuring data with the aid of a sensor for measuring data (12-15) of the mobile unit at the point, wherein the sensor comprises a smoke sensor, a gas sensor, a temperature sensor, a sensor for measuring humidity, a sensor for detecting biological substances and/or a sensor for identifying odours and the action relates to one of these sensors.

11. Mobile terminal (11) according to claim 10, wherein the mobile terminal is configured to receive data, on which the map (22) is based, and/or a video stream from the mobile unit (1).

12. Mobile terminal (11) according to the preceding claim, wherein the touch-sensitive screen (20) is configured for the representation of two windows (23, 24), the size of which preferably can be varied by a user, wherein the map (22) can be displayed in a first window (23) and the video stream can be displayed in a second window (24).

13. Mobile terminal (11) according to one of claims 10 to 12, wherein the mobile terminal is configured to represent sensors and/or actuators (29-33) within the map (22) on the screen (20).

14. Mobile terminal (11) according to one of claims 10 to 13, wherein the mobile terminal is configured to enable an assignment of one or more actions to a point of the sequence of points.

15. Method (M) for specifying a sequence of points (26), to which a mobile unit (1), in particular a mobile cleaning robot, is to move, with the steps
a) displaying a map (S1) on a touch-sensitive screen (20) of a mobile terminal (11), wherein the map (22) represents an environment in which the mobile unit is able to move,
b) specifying a point (S2), to which the mobile unit is to move, by touching the screen within the map,
c) assigning at least one action to the point (S3), wherein the at least one action is to be carried out by the mobile unit at the point (26) and comprises measuring data with the aid of a sensor for measuring data (12-15) of the mobile unit at the point, wherein the sensor comprises a smoke sensor, a gas sensor, a temperature sensor, a sensor for measuring humidity, a sensor for detecting biological substances and/or a sensor for identifying odours and the action relates to one of these sensors,
d) deciding whether a further point is to be specified (S4),
e) if a further point is to be specified, repeating the steps b) to d),
f) if no further point is to be specified, transferring the points and the assigned actions to the mobile unit (S5).

16. Computer program product, which comprises commands that, when executed on a mobile terminal (11), prompt the mobile terminal to carry out the method according to claim 15.

## Revendications

1. Unité mobile (1), notamment robot de nettoyage mobile, comprenant
- un dispositif d'entraînement (2) destiné à déplacer l'unité mobile dans un environnement,
- une unité de navigation (7) pour l'orientation dans l'environnement, et
- un dispositif de transmission (9) pour l'échange sans fil de données,
- dans laquelle l'unité mobile (1) est configurée pour recevoir un point (26) dans l'environnement par l'intermédiaire du dispositif de transmission (9) et pour approcher le point au moyen de l'unité de navigation (7) et du dispositif d'entraînement (2),
**caractérisée en ce que**
- l'unité mobile comprend un capteur pour mesurer des données (12 - 15), lequel comprend un capteur de fumée, un capteur de gaz, un capteur de température, un capteur pour la mesure de l'humidité, un capteur pour la détection de substances biologiques et/ou un capteur pour identifier des odeurs, et **en ce que**
- l'unité mobile est configurée pour exécuter une action à l'aide du capteur lorsque le point (26) est atteint, laquelle est reçue en même temps que le point par l'intermédiaire du dispositif de transmission (9) et est associée au point (26),
- dans laquelle l'action comprend le fait de mesurer des données au point à l'aide du capteur.

2. Unité mobile (1) selon la revendication 1, dans laquelle l'unité de navigation (7) est configurée pour établir une carte (22) de l'environnement dans lequel l'unité mobile se déplace, et pour émettre à un terminal mobile (11) de préférence des données relatives à la carte (22), au moyen du dispositif de transmission (9).

3. Unité mobile (1) selon la revendication 1 ou 2, dans laquelle l'unité mobile comprend en outre une caméra (10) pour générer un flux vidéo, et est de préférence configurée pour émettre le flux vidéo à un terminal mobile (11) au moyen du dispositif de transmission (9).

4. Unité mobile (1) selon l'une quelconque des revendications précédentes, dans laquelle l'unité mobile est configurée pour recevoir une séquence de points par l'intermédiaire du dispositif de transmission (9) et pour approcher les points les uns après les autres selon la séquence au moyen de l'unité de navigation (7) et du dispositif d'entraînement (2).

5. Unité mobile (1) selon la revendication précédente, dans laquelle l'unité mobile est configurée pour exécuter au moins une action lorsqu'un point (26) est atteint, dans laquelle l'au moins une action est reçue par l'intermédiaire du dispositif de transmission (9), de préférence en même temps que la séquence de points, et dans laquelle chaque action est associée à un point ou à plusieurs points (26).

6. Unité mobile (1) selon la revendication précédente, dans laquelle une action consiste à faire pivoter une vue de caméra de 360 degrés.

7. Unité mobile (1) selon l'une quelconque des revendications 5 à 6, dans laquelle une action consiste à échanger des données avec une unité stationnaire (29 - 33), de préférence un capteur (31 - 33) ou un actionneur, dans laquelle l'échange de données est réalisé notamment au moyen de Bluetooth, ZigBee ou Wireless LAN.

8. Unité mobile (1) selon l'une quelconque des revendications précédentes, comprenant un dispositif de traitement (8) qui est configuré pour traiter le flux vidéo et/ou les données, notamment pour les analyser, les interpréter, les agréger, les comprimer et/ou les comparer à une valeur limite, et/ou pour les distribuer.

9. Unité mobile (1) selon la revendication précédente, dans laquelle le dispositif de traitement (8) est configuré pour analyser le flux vidéo au moyen d'un logiciel d'identification d'objet ou pour transférer le flux vidéo à un service dématérialisé ou au terminal mobile au moyen du dispositif de transmission dans le but d'identifier l'objet, et/ou dans laquelle le dispositif de traitement (8) est configuré pour analyser les données au moyen d'un logiciel d'identification de gaz ou pour transférer les données à un service dématérialisé ou au terminal mobile au moyen du dispositif de transmission dans le but d'identifier le gaz.

10. Terminal mobile (11), notamment smartphone ou tablette PC, comprenant
- un écran (20) tactile sur lequel une carte (22) peut être affichée, laquelle représente un environnement dans lequel l'unité mobile (1) peut se déplacer, et
- un dispositif de transmission (21) pour l'échange sans fil de données avec l'unité mobile (1)
- dans laquelle le terminal mobile est configuré de manière à ce qu'en raison d'un contact de l'écran (20) un point (26) puisse être déterminé à l'intérieur de la carte (22), auquel l'unité mobile doit se déplacer, et que le point (26) puisse être émis à l'unité mobile au moyen du dispositif de transmission (21),
**caractérisé en ce que**
- le terminal mobile est configuré pour permettre d'associer une action au point, dans lequel l'action comprend le fait de mesurer des données à l'aide d'un capteur dans le but de mesurer des données (12 - 15) de l'unité mobile au point, dans lequel le capteur comprend un capteur de fumée, un capteur de gaz, un capteur de température, un capteur pour la mesure de l'humidité, un capteur pour la détection de substances biologiques et/ou un capteur pour identifier des odeurs, et dans lequel l'action concerne un de ces capteurs.

11. Terminal mobile (11) selon la revendication 10, dans lequel le terminal mobile est configuré pour recevoir des données relatives à la carte (22) et/ou un flux vidéo de l'unité mobile (1).

12. Terminal mobile (11) selon la revendication précédente, dans lequel l'écran (20) tactile est configuré pour représenter deux fenêtres (23, 24) dont la taille est modifiable de préférence par un utilisateur, dans lequel la carte (22) peut être affichée dans une fenêtre et le flux vidéo peut être affiché dans une deuxième fenêtre (24).

13. Terminal mobile (11) selon l'une quelconque des revendications 10 à 12, dans lequel le terminal mobile est configuré pour représenter sur l'écran (20), à l'intérieur de la carte (22), des capteurs et/ou des actionneurs (29 - 33).

14. Terminal mobile (11) selon l'une quelconque des revendications 10 à 13, dans lequel le terminal mobile est configuré pour permettre d'associer une action ou plusieurs actions à un point de la séquence de points.

15. Procédé (M) destiné à déterminer une séquence de points (26) auxquels une unité mobile (1), notamment un robot de nettoyage mobile, doit se déplacer, comprenant les étapes
a) affichage d'une carte (S1) sur un écran (20) tactile d'un terminal mobile (11), dans lequel la carte (22) représente un environnement dans lequel l'unité mobile peut se déplacer,
b) détermination d'un point (S2) auquel l'unité mobile doit se déplacer, par contact de l'écran à l'intérieur de la carte,
c) association d'au moins une action au point (S3), dans lequel l'au moins une action doit être exécutée au point (26) par l'unité mobile et comprend le fait de mesurer des données à l'aide d'un capteur dans le but de mesurer des données (12 - 15) de l'unité mobile au point, dans lequel le capteur comprend un capteur de fumée, un capteur de gaz, un capteur de température, un capteur pour la mesure de l'humidité, un capteur pour la détection de substances biologiques et/ou un capteur pour identifier des odeurs, et dans lequel l'action concerne un de ces capteurs ,
d) décision si un point supplémentaire doit être déterminé (S4),
e) au cas où un point supplémentaire doit être déterminé, répétition des étapes b) à d),
f) au cas où aucun point supplémentaire ne doit être déterminé, transfert à l'unité mobile des points et des actions associées (S5).

16. Produit de programme informatique qui comprend des instructions, lesquelles, lorsqu'elles sont exécutées sur un terminal mobile (11), incitent le terminal mobile à réaliser le procédé selon la revendication 15.
